# EUROPÄISCHE PATENTSCHRIFT

(11) **EP 3 240 665 B1**
(45) Veröffentlichungstag und Bekanntmachung des Hinweises auf die Patenterteilung: **27.03.2019**
(21) Anmeldenummer: 15771623.4
(22) Anmeldetag: 01.10.2015
(51) Int. Cl.: B29C 45/14

(54) **LOCHFORMER ZUM EINSETZEN IN SPRITGUSSFORMEN**
HOLE PUNCH FOR INSERTION INTO INJECTION MOULDING MOULD
PERFORATEUER POUR PLACER DANS UN MOULE POUR MOULAGE PAR INJECTION

(30) Priorität: 02.10.2014 DE 102014014385
(43) Veröffentlichungstag der Anmeldung: 08.11.2017
(73) Patentinhaber: Zimmermann Formen- und Werkzeugbau GmbH, 35075 Gladenbach (DE)
(72) Erfinder: SCHMIDT, Bernd, 35075 Gladenbach / Weitershausen (DE)
(74) Vertreter: Patentanwälte Olbricht Buchhold Keulertz
(86) Internationale Anmeldenummer: PCT/EP2015/072734
(87) Internationale Veröffentlichungsnummer: WO 2016/050931

(56) Entgegenhaltungen:
- EP-A1- 1 358 992
- WO-A1-03/020491
- DE-A1- 10 342 360
- DE-A1-102007 004 650

## Beschreibung

Die vorliegende Erfindung befasst sich mit einem Lochformer zum Einsetzen in eine Formhälfte einer Spritzgussform.

Das Kunststoffspritzgießen hat in den letzten Jahren immer mehr Bedeutung für Großteile aus Kunststoff erlangt, wie z.B. Stoßfänger, Armaturentafeln, andere große Kunststoffteile am Fahrzeug oder auch Entsorgungsbehälter. Diese Großkunststoffteile bestehen in der Regel aus dünnwandigem Kunststoff, der aber oftmals noch nachbearbeitet werden muss, um Teile an dieser Struktur festlegen zu können. So ist es beispielsweise üblich, dass Stoßfänger nachträglich z.B. mit Hilfe von Stanzmaschinen gelocht werden, um Beleuchtungselemente, Abstandssensoren oder dergleichen in dadurch gefertigten Ausnehmungen einsetzen zu können. Der hierdurch entstehende Mehraufwand ist beträchtlich. In den Fertigungsanlagen ist es erforderlich, neben dem zusätzlichen Arbeitsschritt, der bereits den Prozess als solchen verlangsamt, geeignete Stanzmaschinen vorzuhalten, die in der Anschaffung und Unterhaltung beträchtliche Kosten verursachen.

Aus der DE 10 2007 004 650 A1 ist Spritzgusswerkzeug zur Herstellung einer eine Aufreißlinie aufweisenden Airbag-Abdeckung aus einem Kunststoff bekannt. Es hat eine erste und eine zweite Spritzgusshalbform, zwischen denen ein Hohlraum zur Befüllung mit dem Kunststoff der Airbag-Abdeckung gebildet ist, ein Messer, das eine Kante mit einer Kontur entsprechend der Aufreißlinie hat und das in einer in der ersten Spritzgusshalbform vorgesehenen und zum Hohlraum offenen Messerführung angeordnet ist. Des Weiteren weist das Spritzgusswerkzeug einen Messerverstellmechanismus auf, mittels dessen das Messer längs der Messerführung verschiebbar ist, so dass die Prägekante in den Hohlraum hineinragt.

Weitere bekannte Ausführungen werden zum Beispiel durch EP 1 358 992 A1 oder WO 03/020491 A1 beschrieben.

Es ist auch bekannt, in die Kavität von Spritzgussformen Formelemente einzubringen, durch welche die entsprechenden Ausnehmungen beim Spritzgussvorgang selbst hergestellt werden. Allerdings sind die dazu notwendigen im Spritzvorgang starren Formelemente mit dem Nachteil behaftet, dass der in die Form mit hoher Geschwindigkeit und Druck eingespritzte Kunststoff an dieser Stelle um die Formelemente herum strömen muss, so dass sich auf der dem Einlasskanal in die Form abgewandten Seite des Formelementes eine Naht ausbildet, die optisch deutlich sichtbar bleibt und auch beispielsweise durch einen Lackiervorgang nicht kaschiert werden kann, sogenannte Bindenaht schwächt das Kunststoffteil zudem.

Die Aufgabe der vorliegenden Erfindung besteht darin, eine Vorrichtung zu schaffen, die das Einbringen von Ausnehmungen in Kunststoffspritzteile erleichtert und die Qualität der hergestellten Bauteile verbessert.

Erfindungsgemäß wird die Aufgabe durch einen Lochformer gelöst, der zum Einsetzen in einer Formhälfte einer Spritzgussform bestimmt ist, wobei er ein Gehäuse aufweist, in welchem ein Betätigungselement mit einer Druckfläche und ein Messer mit einer Schneidkante angeordnet sind, wobei das Betätigungselement und das Messer derart gekoppelt sind, dass bei einem Eindrücken des Betätigungselementes in das Gehäuse sich das Messer aus dem Gehäuse heraus bewegt.

Es hat sich gezeigt, dass sich mittels eines derartigen Lochformers trotz des konstruktiv sehr einfachen Aufbaus qualitativ hochwertige Ausnehmungen in dem herzustellenden Spritzgussteil ausbilden lassen. Der konstruktiv einfache Aufbau macht sich die Erkenntnis zu Nutze, dass der insbesondere kurz vor dem Abschließen der Befüllung der Spritzgießform mit der erhitzten Kunststoffmasse auftretende starke Druckanstieg in der Form genutzt werden kann, den Lochformer dadurch auszulösen, dass die erhitzte Kunststoffmasse auf die Druckfläche des Betätigungselementes wirkt. Dadurch wird das Betätigungselement verlagert und wirkt über die Kopplung auf das Messer, das dann die Ausnehmung in dem nur teilweise erstarrten Kunststoff freischneiden kann. Der Vorteil der erfindungsgemäßen Lösung liegt darin, dass die Form zunächst ohne Strömungshindernis im Bereich der Ausnehmung befüllt werden kann, d.h. der erhitzte Kunststoff kann beim Befüllen der Form die Stelle des Spritzgussteils, an welcher die Ausnehmung vorgesehen ist, problemlos durchströmen, so dass es nicht zu Unregelmäßigkeiten wie z.B. Bindenähten, in der Struktur des Kunststoffes kommen kann. Erst wenn die Form praktisch ganz oder fast vollständig befüllt ist, kommt durch den ansteigenden Druck der Lochformer zum Einsatz und schneidet die gewünschte Ausnehmung in dem Material frei. Entsprechend ist Gegenstand der vorliegenden Erfindung auch ein Verfahren zur Herstellung von Ausnehmungen in Spritzgussteilen, bei welchem eine erhitzte Kunststoffmasse unter Druck in eine geschlossene Spritzgussform eingegeben wird, wobei der Druckanstieg während des Füllvorgangs genutzt wird, um über die Kunststoffmasse das Betätigungselement eines Lochformers der zuvor beschriebenen Art zu verlagern, so dass das Messer des Lochformers in die Kavität bewegt wird und eine Ausnehmung aus dem Formteil ausgeschnitten wird.

Vorzugsweise wird der Weg des Messers derart begrenzt, dass das Messer eine Filmanbindung zwischen dem Kunststoff im Bereich der Ausnehmung und dem Formteil stehen lässt, die in einem nachfolgenden Arbeitsgang durch leichtes Eindrücken aufgetrennt wird. Der herausgetrennte Ausschnitt kann wieder eingeschmolzen oder entsorgt werden.

Bei einer bevorzugten Ausführungsform der Erfindung ist die Kopplung des Betätigungselementes mit dem Messer dadurch realisiert, dass das Messer und das Betätigungselement in einer Kammer angeordnet sind, der mit einer hydraulischen Flüssigkeit befüllt ist, so dass die durch das Betätigungselement verdrängte Flüssigkeit das Messer bewegt. Eine derartige Lösung kann sehr kompakt ausgeführt sein und benötigt keinerlei bewegte Teile für die Kraftübertragung zwischen dem Betätigungselement und dem Messer. Zudem ist das Übersetzungsverhältnis zwischen dem als Kolben ausgeführten Betätigungselement und dem Messer durch die Wahl der Oberflächen in weitem Maße einstellbar. Die Abdichtung des mit der hydraulischen Flüssigkeit befüllten Raumes kann auf konstruktiv einfache Weise durch im Stand der Technik verfügbare Dichtelemente zwischen dem Gehäuse, dem Messer und dem Betätigungselement abgedichtet werden.

Vorzugsweise ist weiterhin eine Rückstellfeder vorgesehen, die das Betätigungselement und das Messer in eine Ruheposition (Einspritzposition) zurückstellt. Die Rückstellfeder kann beliebig angeordnet sein, da das Betätigungselement und das Messer in ihrer Bewegung miteinander gekoppelt sind. Vorzugsweise befindet sich die Rückstellfeder zwischen dem Betätigungselement und dem Messer, was einer kompakten Bauweise entgegenkommt. Der Auslösevorgang selbst wird zum einen durch die Größe der Druckfläche aber auch durch die Steifigkeit und Vorspannkraft einer solchen Rückstellfeder bestimmt. Da die Auslösung des Messer erst spät erfolgen soll, um ein zu frühes Eindringen des Messers in die noch strömende noch nicht verfestigte Kunststoffmasse zu vermeiden, sind sehr steife Federn bevorzugt, die beispielsweise als Schrauben- oder Tellerfedern ausgebildet sein können.

Um den Auslösezeitpunkt unabhängig von der Federrate der zum Einsatz kommenden Federelemente beeinflussen zu können und sehr steife Federn zu vermeiden, ist in einer bevorzugten Ausführungsform der Erfindung vorgesehen, dass in einer Fluidverbindung zwischen dem Betätigungselement und dem Messer ein Folgeventil angeordnet ist, das die Fluidverbindung erst beim Überschreiten eines durch das Betätigungselement aufgebauten Mindestdruckes freigibt.

Diese Ausführungsform hat den Vorteil, dass der das Messer auslösende Geberzylinder zunächst völlig vom Nehmerzylinder des Betätigungselementes entkoppelt bleibt und erst bei einem sehr starken Druckanstieg, wie er in der Regel erst im Bereich des Erstarrens des Kunststoffes auftritt, das Messer dann durch Freigabe des Folgeventils quasi schlagartig ausgelöst wird. Der Schnitt wird dadurch sehr sauber und eine Schlierenbildung auf der Oberfläche des Kunststoffteils infolge eines Nachströmens bei schon leicht ausfahrendem Messer wird vermieden. Das Federelement wird nur für die Rückstellung benötigt, wobei die Rückstellkräfte wegen des in der Rückströmrichtung offenen Folgeventils im Verhältnis sehr klein sind, so dass ein Federelement mit entsprechend kleiner Federrate zum Einsatz kommen kann, z.B. in Form einer Schraubenfeder.

Vorzugsweise ist zwischen dem Folgeventil und dem Messer ein Zwischenteil vorgesehen, dass wenigstens einen Durchlasskanal aufweist, der die Auslassseite des Folgeventils mit dem Ölraum zum Betätigen des Messers verbindet. Das Zwischenteil dient auch als Halter für das Folgeventil und verschließt beispielsweise mit ihm gemeinsam die Fluidverbindung zwischen dem Betätigungselement und dem Messer.

Im Sinne einer kompakten Bauweise ist es auch von Vorteil, wenn das Messer das Betätigungselement ringförmig umgibt. Diese Bauweise ist für das Herstellen von Ausnehmungen auch deshalb von besonderem Vorteil, weil sich das praktisch aus der Kavität bewegende Betätigungselement innerhalb des Schnittbereiches liegt, so dass die zur Betätigung des Betätigungselements auftretende Materialanhäufung in das Innere des Lochformers strömen kann, wo das Betätigungselement entsprechendes Volumen freigibt und dann durch das Messer unmittelbar wieder abgetrennt wird. Ringförmig bedeutet dabei nicht unbedingt kreisringförmig, es sind auch ovale oder eckige geschlossene Formen des Messers möglich.

Die ringförmige Ausgestaltung des Messers bietet auch den Vorteil einer einfach zu realisierenden Abdichtung, die vorzugsweise aus einem Dichtelement zwischen dem Messer und dem Gehäuse und einem Dichtelement zwischen dem Betätigungselement und dem Messer besteht.

Es hat sich ferner gezeigt, dass unter manchen Umständen eine Ausführungsform von Vorteil ist, bei welcher in einer Wandung des ringförmigen Messers wenigstens eine Ausgleichsbohrung vorgesehen ist. Durch die Ausgleichsbohrung kann aufgeschmolzener Kunststoff in den Bereich der Druckfläche des Betätigungselements strömen, auch wenn sich das Messer schon relativ weit in die Kavität hinein bewegt hat. Auf diese Weise kann ein Druckabfall verhindert werden, wobei es sich allerdings gezeigt hat, dass bei vielen Anwendungsfällen derartige Ausgleichsbohrungen gar nicht notwendig sind.

Vorzugsweise ist der maximale Ausfahrweg des Messers durch einen Anschlag des Betätigungselementes begrenzt. Auf diese Weise wird konstruktiv einfach verhindert, dass das Messer die gegenüberliegende Formhälfte beschädigen kann. Da es wünschenswert ist, an dem Messer eine Schneidkante auszubilden, deren Breite deutlich unterhalb der Wandstärke beispielsweise eines ringförmigen Messers liegt, ist es bevorzugt, die Schneidkante des Messers am Außenrand des Ringes auszubilden, wobei zwischen dem Betätigungselement und dem Messer eine in der Ruheposition dachförmige Rinne ausgebildet ist. Bei einer derartigen Ausführungsform liegt die Schnittkante in der Ruheposition fluchtend zu der Innenfläche der Formhälfte, während das Messer zur Ringinnenseite hin vertieft liegt, um eine definierte Schneidkante zu erhalten. Um eine Kante im Bereich des Betätigungselementes zu vermeiden, die beim Spritzgussvorgang zu Verwirbelungen führen konnte, ist am Außenumfang des Betätigungselementes entsprechend der andere Teil der Rinne ausgebildet, so dass ein homogenes Überströmen des Lochformers vor dem Auslösen möglich ist.

Gegenstand der vorliegenden Erfindung ist auch eine Spritzgussform mit einem oder mehreren der zuvor beschriebenen Lochformer, die entsprechend an den Stellen eingesetzt werden, an denen konstruktiv Ausnehmungen in dem herzustellenden Kunststoffteil vorgesehen sein sollen. Der Lochformer kann sowohl auf der Innen- als auch auf der Außenseite (Matrize) im Werkzeug eingesetzt werden. Zweckmäßig kann es sein, an der Innenfläche einer Formhälfte in einem einem Lochformer gegenüberliegenden Bereich eine mit der Schneidkante des Messers dieses Lochformers korrespondierende Erhebung vorzusehen, damit das Messer gegen einen definierten Gegenhalt arbeiten kann, wobei beispielsweise diese Erhebung derart ausgestaltet sein kann, dass bei maximal ausgefahrenem Messer die bereits zuvor angesprochene Filmanbindung zwischen dem Kunststoffformteil und dem Material in der Ausnehmung bestehen bleibt, die später leicht mechanisch entfernt werden kann. Eine solche Erhebung kann im Anschluss auch einen Radius zur angrenzenden Fläche beinhalten.

Nachfolgend wird anhand der beigefügten Zeichnung näher auf ein Ausführungsbeispiel der Erfindung eingegangen. Es zeigen:
Fig. 1 einen Querschnitt eines Lochformers für eine Spritzgussform in der Ruheposition;
Fig. 2 den Lochformer nach Fig. 1 in einer Arbeitsposition;
Fig. 3 einen Querschnitt einer Ausführungsform eines Lochformers mit einem Folgeventil.

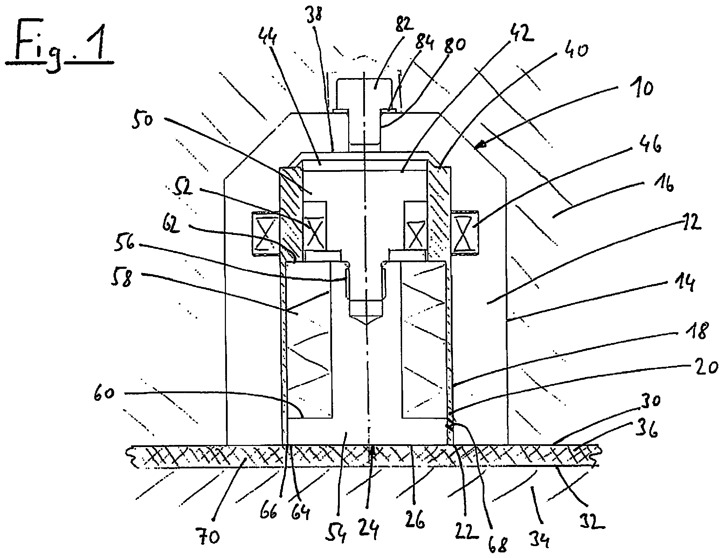

In Fig. 1 ist ein Lochformer 10 gezeigt, dessen Gehäuse 12 in einer entsprechenden Aufnahme 14 einer Formhälfte 16 einer Spritzgussform (nicht näher dargestellt) eingesetzt ist. In dem Gehäuse 12 ist eine Bohrung 18 vorgesehen, die bei dem gezeigten Ausführungsbeispiel kreisförmig ist. In dieser Bohrung sitzt ein ringförmiges Messer 20, an dessen Stirnfläche eine Schneidkante 22 ausgebildet ist. In dem ringförmigen Messer 20 ist ein zweiteiliges Betätigungselement 24 angeordnet, das eine stirnseitige Druckfläche 26 aufweist. Eine Stirnfläche 28 des Gehäuses 12, die Schneidkante 22 und die Druckfläche 26 fluchten mit einer Innenfläche 30 der Formhälfte 16, in welche der Lochformer 10 eingesetzt ist. Zwischen der Innenfläche 30 dieser Formhälfte und einer Außenfläche 32 der gegenüberliegenden zweiten Formhälfte ist im dargestellten geschlossenen Zustand der Form eine Kavität 36 ausgebildet.

Im hinteren Bereich des Gehäuses 12 ist zwischen einer Rückwand 38 in der Bohrung 18 und der Rückfläche 40 des Messers sowie der Rückfläche 42 des Betätigungselements 24 eine Kammer 44 ausgebildet, die mit einer hydraulischen Flüssigkeit befüllt ist. Damit diese Flüssigkeit nicht in die Kavität 36 dringen kann, ist zwischen der Außenfläche des Messers 20 und dem Gehäuse 12 eine erste Dichtung 46 vorgesehen, während zwischen der Innenwandung des Messers 20 und dem oberen Teil 50 des Kolbens eine zweite Dichtung 52 vorgesehen ist. Das obere Teil 50 des Betätigungselements ist mit einem unteren Teil 54 über eine Gewindeverbindung 56 verschraubt. Die zweite Dichtung 52 sitzt dabei im Bereich eines verjüngten Durchmessers des oberen Teils 50, während in einem verjüngten Bereich des unteren Teils 54 eine als Tellerfeder 58 ausgebildete Rückstellfeder vorgesehen ist, die zwischen einem Absatz 60 des unteren Teils 54 und einem Absatz 62 des Messers vorgespannt angeordnet ist. Grundsätzlich ist auch der Einsatz einer Schraubenfeder möglich, es hat sich aber gezeigt, dass unter den bestehenden Druckverhältnissen der Einsatz einer Tellerfeder 58 zweckmäßig sein kann, um das Messer nicht zu frühzeitig auszulösen.

Von der Schneidkante 22 aus gesehen radial nach innen liegt die Stirnfläche des Messer 20 geringfügig zurück versetzt, während quasi spiegelsymmetrisch die Stirnfläche 26 des unteren Teils 54 mit einer Schräge 64 an ihrem Außenrand ausgebildet ist, so dass das Messer und das untere Teil 54 des Betätigungselements 24 in der Ruheposition eine dachförmige Rinne 66 ausbilden.

Weiterhin ist in der Wandung des Messers eine Ausgleichsbohrung 68 gezeigt, die aber nicht notwendigerweise vorhanden sein muss.

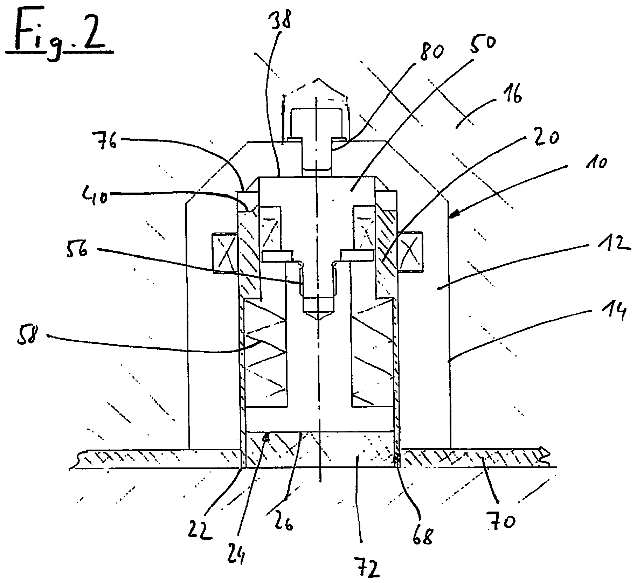

Nachfolgend wird die Funktionsweise des zuvor beschriebenen Lochformers 10 während eines Spritzgießvorganges beschrieben. Fig. 1 zeigt bereits einen Zustand in welchem die Kavität 36 zwischen den Innenflächen 30, 32 der Formhälften 16, 34 mit der erhitzten Kunststoffmasse druckbefüllt ist. Der gezeigte Lochformer macht sich die Besonderheit des Spritzgießvorganges zu Nutze, dass zum Ende des Spritzvorganges hin ein steiler Druckanstieg erfolgt, sobald die Kavität 36 vollständig oder nahezu vollständig befüllt ist. Der Druckanstieg in der Kunststoffmasse 70 bewirkt auch einen starken Druck auf die Druckfläche 26 des Betätigungselements 24, so dass sich dieses unter Überwindung der Spannkraft der Tellerfeder 58 innerhalb des Messers 20 in das Gehäuse 12 hineinbewegt. Aufgrund der wesentlich kleineren Stirnfläche des Messers 20 wird dieses durch die Kunststoffmasse 70 nicht verlagert, sondern vielmehr durch das im Bereich der Kammer 44 durch das obere Teil 50 des Betätigungselementes verdrängte Volumen der hydraulischen Flüssigkeit in die Kavität hinein bewegt, bis die in Fig. 2 gezeigte Endstellung des Messers erreicht ist. Dort hat sich der obere Teil 50 des Befestigungselements 24 an die Rückwand der Kammer 44 angelegt, die hier als Anschlag wirkt.

Während des Schneidvorgangs schneidet die Schneidkante 22 entsprechend ihrer Form eine kreisförmige Ausnehmung in die Kunststoffmasse, wobei der Schnitt entweder vollständig ausgeführt werden kann oder zwischen dem ausgeschnittenen Element 72 (siehe Fig. 2) und der Kunststoffmasse 70 nach dem Erkalten eine Filmanbindung 74 stehen bleiben kann, die in einem nachfolgenden Arbeitsschritt leicht aufgebrochen werden kann. Der Vorteil der Filmanbindung ist, dass das ausgestanzte Element 72 nicht unkontrolliert in die Form fallen kann, wenn das fertige Kunststoffteil nach dem Trennen der Formhälften 16, 34 entnommen wird. Die Ausgleichsbohrung 68 kann das Nachströmen von Kunststoffmasse in den mittleren Bereich fördern und einem eventuellen Druckabfall durch ein Verschließen dieses Raumes durch das ausgefahrene Messer 20 entgegenwirken. Es hat sich aber gezeigt, dass in den meisten Fällen eine derartige Ausgleichsbohrung gar nicht notwendig ist.

Während des Entformens stellt die Tellerfeder 58 das Betätigungselement 24 und das Messer 20 wieder in die in Fig. 1 gezeigte Ruheposition zurück, wobei sich die Rückfläche 40 des Messers an einen Anschlag 76 an der Rückwand des Gehäuses 12 anlegt, um die exakte Positionierung der Stirnflächen zu gewährleisten.

Gezeigt ist in Fig. 1 und 2 auch eine Entlüftungsbohrung 80, die mit einer Dichtschraube 82 und einer Dichtung 84 verschlossen ist. Mit Hilfe dieser Entlüftungsvorrichtung wird die Kammer 44 vor dem Einbau des Lochformers in die Formhälfte entlüftet, da eventuell vorhandene Luftreste aufgrund ihrer Komprimierbarkeit die Funktion des Lochformers 10 beeinträchtigen könnten.

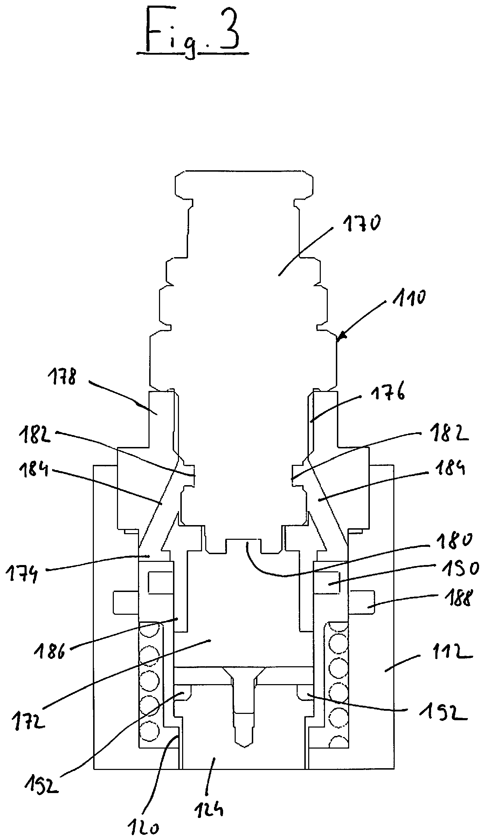

Fig. 3 zeigt eine Ausführungsform eines Lochformers 110, bei welchem ein Folgeventil 170 vorgesehen ist, das eine Fluidverbindung zwischen dem Betätigungselement 124 und dem Messer 120 in einen Nehmerzylinder 172, der durch das Betätigungselement 124 betätigt wird, und einen Geberzylinder 174 unterteilt, der das Messer 120 auslöst. Folgeventile, die auch als Druckfolgeventile oder Zuschaltventile bezeichnet werden, geben eine Fluidverbindung erst nach Erreichen eines Grenzdruckes frei.

Das Folgeventil 170 ist über ein Gewinde 176 in ein Zwischenelement 178 eingeschraubt und gegenüber diesem abgedichtet. Eine Einlassöffnung 180 des Folgenventils 170, das selbst als an sich bekanntes Bauteil ohne innere Einzelheiten gezeigt ist, wird nach Überschreiten des Grenzdruckes durch das Folgeventil 170 mit Auslassöffnungen 182 verbunden, die über Durchlasskanäle 184 mit dem Geberzylinder 174 in Verbindung stehen. Der Geberzylinder besitzt einen ringförmigen Ölraum zwischen dem Gehäuse 112 und eine Ringwandung 186 des Zwischenelements 178. Dichtungen 188, 190, 192 dichten die Ölräume des Geberzylinders 172 und des Nehmerzylinders 174 gegeneinander und gegen die Kavität der Form ab.

Bei einem Einspritzen des verflüssigten Kunststoffes in die Kavität der Form drückt dieser mit zunehmendem Druck gegen das Betätigungselement, wenn die Kavität nahezu völlig ausgefüllt ist. Das Folgeventil 170 blockiert dabei zunächst die Fluidverbindung zwischen dem Nehmerzylinder 172 und dem Geberzylinder. Oberhalb eines einstellbaren Grenzdruckes, der in der Größenordnung von über 100 bar, beispielsweise bei 300 bar liegt, öffnet das Druckfolgeventil 170 und der im Nehmerzylinder 172 aufgebaute Druck wirkt praktisch schlagartig auf den Geberzylinder 174, so dass das Messer 120 ausgelöst wird und sich in die Kavität bewegt, wo es die gewünschte Lochung in der sich dann praktisch nicht mehr bewegenden Kunststoffmasse herstellt.

Eine Schraubenfeder, die erheblich schwächer dimensioniert ist, als die entsprechende Feder der Ausführungsformen gemäß Fig. 1 und 2, dient ausschließlich der Rückstellung des Systems, wobei in dieser Wirkrichtung das Folgeventil den Ölstrom nicht behindert, so dass eine kleine Rückstellkraft der Feder ausreichend ist.

## Patentansprüche

1. Lochformer zum Einsetzen in eine Aufnahme (14) einer Formhälfte (16) einer Spritzgussform, **dadurch gekennzeichnet, dass** der Lochformer ein Gehäuse (12; 112) aufweist, in welchem ein Betätigungselement (24; 124) mit einer Druckfläche (26) und ein Messer (20; 120) mit einer Schneidkante (22) angeordnet sind, wobei das Betätigungselement (24; 124) und das Messer derart gekoppelt sind, dass bei einem Eindrücken des Betätigungselements (24; 124) in das Gehäuse (12; 112) sich das Messer (20; 120) aus dem Gehäuse heraus verlagert.

2. Lochformer nach Anspruch 1, **dadurch gekennzeichnet, dass** das Messer (20; 120) und das Betätigungselement (24; 124) in einer Kammer (44) angeordnet sind, die mit einer hydraulischen Flüssigkeit befüllt ist, so dass die durch das Betätigungselement (26; 126) verdrängte Flüssigkeit das Messer verlagert.

3. Lochformer nach Anspruch 2, **dadurch gekennzeichnet, dass** in einer Fluidverbindung zwischen dem Betätigungselement (124) und dem Messer (120) ein Folgeventil (170) angeordnet ist, das die Fluidverbindung beim Überschreiten eines durch das Betätigungselement (124) aufgebauten Mindestdruckes freigibt.

4. Lochformer nach Anspruch 3, **dadurch gekennzeichnet, dass** zwischen dem Folgenventil (170) und dem Messer (120) ein Zwischenelement (178) vorgesehen ist, das wenigstens einen Durchlasskanal (184) aufweist, der eine Auslassseite (182) des Folgeventils (170) mit einem Ölraum zum Betätigen des Messers (120) verbindet.

5. Lochformer nach einem der vorhergehenden Ansprüche, **dadurch gekennzeichnet, dass** eine Rückstellfeder (58; 194) vorgesehen ist, die das Betätigungselement (24; 124) und das Messer (20; 120) nach einem Auslenken in eine Ruheposition zurückstellt.

6. Lochformer nach einem der vorhergehenden Ansprüche, **dadurch gekennzeichnet, dass** das Messer (20; 120) das Betätigungselement (24; 124) ringförmig umgibt.

7. Lochformer nach Anspruch 6, **dadurch gekennzeichnet, dass** zwischen dem Messer (20; 120) und dem Gehäuse (12; 112) eine erste Dichtung (46; 188) und zwischen dem Betätigungselement (24; 124) und dem Messer (20; 120) eine zweite Dichtung (52; 192) vorgesehen sind.

8. Lochformer nach Anspruch 6 oder 7, **dadurch gekennzeichnet, dass** in einer Wandung des Messers (20; 120) wenigstens eine Ausgleichsbohrung (68) vorgesehen ist.

9. Lochformer nach einem der vorhergehenden Ansprüche, **dadurch gekennzeichnet, dass** der maximale Ausfahrweg des Messers (20; 120) durch einen Anschlag des Betätigungselements (24; 124) begrenzt ist.

10. Lochformer nach einem der Ansprüche 6 bis 9, **dadurch gekennzeichnet, dass** die Schneidkante (22) des Messers am Außenrand der Stirnfläche ausgebildet ist, wobei zwischen dem Betätigungselement (24; 124) und dem Messer (20; 120) eine in der Ruheposition dachförmige Rinne (66) ausgebildet ist.

11. Spritzgießform mit zwei Formhälften (16,34) **gekennzeichnet durch** wenigstens einen Lochformer (10; 110) nach einem der vorhergehenden Ansprüche, der in der Aufnahme (14) der Formhälfte (16) eingesetzt ist und dessen Messer (20; 120) und Betätigungselement (24; 124) im Ruhezustand bündig mit einer jeweils zugeordneten Innenfläche (30) der betreffenden Formhälfte (16) abschließen.

12. Spritzgussform nach Anspruch 11, **dadurch gekennzeichnet, dass** an einer weiteren Innenfläche (32) einer weiteren Formhälfte (34) in einem dem Lochformer (10; 110) gegenüberliegenden Bereich eine mit der Schneidkante (22) des Messers (20; 120) dieses Lochformers (10; 110) korrespondierende Erhebung vorgesehen ist.

13. Verfahren zur Herstellung von Ausnehmungen in Spritzgussteilen, **dadurch gekennzeichnet, dass** eine erhitzte Kunst Stoffmasse (70) unter Druck in eine geschlossene Spritzgießform eingebracht wird, wobei der Druckanstieg während der Nachdruckphase (Schwundkompensation) genutzt wird, um über die Kunst Stoffmasse (70) auf eine Druckfläche (26) eines Betätigungselements (24; 124) eines Lochformers nach einem der Ansprüche 1 bis 10 zu wirken, so dass ein Messer (20; 120) in die Kavität bewegt wird und eine Ausnehmung in das Formteil eingearbeitet wird.

14. Verfahren nach Anspruch 13, **dadurch gekennzeichnet, dass** der Weg des Messers (20; 120) begrenzt wird, so dass zwischen dem Messer (20; 120) und der gegenüberliegenden Formhälfte (34) eine Filmanbindung (74) zwischen einem auszustanzenden Element (72) und der Kunst Stoffmasse (70) stehen gelassen wird, die in einem nachfolgenden Arbeitsgang aufgetrennt wird.

15. Verfahren nach Anspruch 13 oder 14, **dadurch gekennzeichnet, dass** mittels eines Folgeventils (170) eine Fluidverbindung zwischen dem Betätigungselement (124) und dem Messer (120) blockiert wird, wobei die Fluidverbindung durch das Folgeventil (170) oberhalb eines Schwellenwertes eines durch das Betätigungselement (124) aufgebauten Druckes freigegeben wird.

## Claims

1. Hole former for inserting into a recess (14) of a mould half (16) of an injection mould, **characterised in that** the hole former has a housing (12; 112) in which an actuation element (24; 124) having a printing surface (26) and a blade (20; 120) having a cutting edge (22) are arranged, wherein the actuation element (24; 124) and the blade are coupled such that, in the case of an impression of the actuation element (24; 124) into the housing (12; 112), the blade (20; 120) is displaced from the housing.

2. Hole former according to claim 1, **characterised in that** the blade (20; 120) and the actuation element (24; 124) are arranged in a chamber (44) which is filled with a hydraulic liquid, such that the liquid forced through the actuation element (26; 126) displaces the blade.

3. Hole former according to claim 2, **characterised in that** a sequence valve (170) is arranged in a fluid connection between the actuation element (124) and the blade (120), which releases the fluid connection in the case of exceeding a minimum pressure established by the actuation element (124).

4. Hole former according to claim 3, **characterised in that** an intermediate element (178) is provided between the sequence valve (170) and the blade (120), which has at least one through channel (184) which connects an outlet side (182) of the sequence valve (170) to an oil chamber for actuating the blade (120).

5. Hole former according to one of the preceding claims, **characterised in that** a return spring (58; 194) is provided which returns the actuation element (24; 124) and the blade (20; 120) into an idle position after a deflection.

6. Hole former according to one of the preceding claims, **characterised in that** the blade (20; 120) surrounds the actuation element (24, 124) in an annular manner.

7. Hole former according to claim 6, **characterised in that** a first seal (46; 188) is provided between the blade (20; 120) and the housing (12; 112) and a second seal (52; 192) is provided between the actuation element (24; 124) and the blade (20; 120).

8. Hole former according to claim 6 or 7, **characterised in that** at least one balancing hole (68) is provided in a wall of the blade (20; 120).

9. Hole former according to one of the preceding claims, **characterised in that** the maximum extension path of the blade (20; 120) is delimited by a stop of the actuation element (24; 124).

10. Hole former according to one of claims 6 to 9, **characterised in that** the cutting edge (22) of the blade is formed on the outer edge of the front surface, wherein a roof-like gutter (66) in the idle position is formed between the actuation element (24; 124) and the blade (20; 120).

11. Injection mould having two mould halves (16, 34), **characterised by** at least one hole former (10; 110) according to one of the preceding claims, which is inserted into the recess (14) of the mould half (16) and the bade (20; 120) and actuation element (24, 124) of which end flush with a respectively allocated inner surface (30) of the relevant mould half (16).

12. Injection mould according to claim 11, **characterised in that**, on a further inner surface (32) of a further mould half (34) in a region lying opposite the hole former (10; 110), an elevation corresponding to the cutting edge (22) of the blade (20; 120) of this hole former (10; 110) is provided.

13. Method for producing recesses in injection-moulded parts, **characterised in that** a heated plastic mass (70) is introduced into a closed injection mould under pressure, wherein the pressure increase during the holding pressure phase (shrinkage compensation) is used in order to affect a printing surface (26) of an actuation element (24; 124) of a hole former according to one of claims 1 to 10 via the plastic mass (70), such that a blade (20; 120) is moved into the cavity and a recess is worked into the mould part.

14. Method according to claim 13, **characterised in that** the path of the knife (20; 120) is delimited such that, between the blade (20; 120) and the opposite mould half (34), a film connection (74) is left between an element (72) to be punched out and the plastic mass (70) is maintained, which is separated in a subsequent work process.

15. Method according to claim 13 or 14, **characterised in that** a fluid connection between the actuation element (124) and the blade (120) is blocked by means of a sequence valve (170), wherein the fluid connection is released through the sequence valve (170) above a threshold value of a pressure established by the actuation element (124).

## Revendications

1. Perforateur destiné à être placé dans un logement (14) d'un demi-moule (16) d'un moule de moulage par injection, **caractérisé en ce que** le perforateur comporte un corps (12 ; 112) dans lequel sont agencés un élément d'actionnement (24; 124) avec une surface de pression (26) et un couteau (20; 120) avec un tranchant (22), l'élément d'actionnement (24 ; 124) et le couteau étant couplés de telle sorte que, lors d'un enfoncement de l'élément d'actionnement (24 ; 124) dans le corps (12 ; 112), le couteau (20 ; 120) se déplace hors du corps.

2. Perforateur selon la revendication 1, **caractérisé en ce que** le couteau (20 ; 120) et l'élément d'actionnement (24 ; 124) sont agencés dans une chambre (44) qui est remplie d'un fluide hydraulique de telle sorte que le fluide déplacé par l'élément d'actionnement (26 ; 126) déplace le couteau.

3. Perforateur selon la revendication 2, **caractérisé en ce qu'**une soupape de séquence (170) est agencée dans une liaison fluidique entre l'élément d'actionnement (124) et le couteau (120), laquelle soupape de séquence (170) libère la liaison fluidique lors du dépassement d'une pression minimale établie par l'élément d'actionnement (124).

4. Perforateur selon la revendication 3, **caractérisé en ce qu'**il est prévu entre la soupape de séquence (170) et le couteau (120) un élément intermédiaire (178) qui comporte au moins un canal de passage (184) qui relie un côté sortie (182) de la soupape de séquence (170) avec une chambre d'huile afin d'actionner le couteau (120).

5. Perforateur selon l'une quelconque des revendications précédentes, **caractérisé en ce qu'**il est prévu un ressort de rappel (58 ; 194) qui ramène l'élément d'actionnement (24 ; 124) et le couteau (20 ; 120) dans une position de repos après une sortie.

6. Perforateur selon l'une quelconque des revendications précédentes, **caractérisé en ce que** le couteau (20 ; 120) entoure en forme d'anneau l'élément d'actionnement (24 ; 124).

7. Perforateur selon la revendication 6, **caractérisé en ce qu'**il est prévu un premier joint d'étanchéité (46 ; 188) entre le couteau (20 ; 120) et le corps (12 ; 112) et un deuxième joint d'étanchéité (52 ; 192) entre l'élément d'actionnement (24 ; 124) et le couteau (20 ; 120).

8. Perforateur selon la revendication 6 ou 7, **caractérisé en ce qu'**il est prévu au moins un trou de compensation (68) dans une paroi du couteau (20 ; 120).

9. Perforateur selon l'une quelconque des revendications précédentes, **caractérisé en ce que** la course de sortie maximale du couteau (20 ; 120) est délimitée par une butée de l'élément d'actionnement (24; 124).

10. Perforateur selon l'une quelconque des revendications 6 à 9, **caractérisé en ce que** le tranchant (22) du couteau est réalisé au niveau du bord extérieur de la surface frontale, un conduit (66) en forme de toit dans la position de repos étant réalisé entre l'élément d'actionnement (24; 124) et le couteau (20 ; 120).

11. Moule de moulage par injection avec deux demi-moules (16, 34), **caractérisé par** au moins un perforateur (10 ; 110) selon l'une quelconque des revendications précédentes, qui est placé dans le logement (14) du demi-moule (16) et dont le couteau (20 ; 120) et l'élément d'actionnement (24; 124) affleurent à l'état de repos avec une surface interne (30) respectivement associée du demi-moule (16) considéré.

12. Moule de moulage par injection selon la revendication 11, **caractérisé en ce qu'**il est prévu au niveau d'une autre surface interne (32) d'un autre demi-moule (34) dans une zone située en face du perforateur (10 ; 110) une bosse correspondant au tranchant (22) du couteau (20 ; 120) de ce perforateur (10 ; 110).

13. Procédé de fabrication d'évidements dans des pièces moulées par injection, **caractérisé en ce qu'**une masse plastique chauffée (70) est amenée sous pression dans un moule de moulage par injection fermé, l'augmentation de la pression pendant la phase de maintien en pression (compensation d'affaiblissement) étant exploitée pour agir via la masse plastique (70) sur une surface de pression (26) d'un élément d'actionnement (24 ; 124) d'un perforateur selon l'une quelconque des revendications 1 à 10, de telle sorte qu'un couteau (20 ; 120) est déplacé dans la cavité et un évidement est fabriqué dans la pièce moulée.

14. Procédé selon la revendication 13, **caractérisé en ce que** la course du couteau (20 ; 120) est limitée de telle sorte qu'il reste entre le couteau (20 ; 120) et le demi-moule (34) situé en face une liaison par film (74) entre un élément à matricer (72) et la masse plastique (70), laquelle liaison par film est séparée dans une étape de travail suivante.

15. Procédé selon la revendication 13 ou 14, **caractérisé en ce que**, au moyen d'une soupape de séquence (170), une liaison fluidique entre l'élément d'actionnement (124) et le couteau (120) est bloquée, la liaison fluidique étant libérée par la soupape de séquence (170) au-dessus d'une valeur de seuil d'une pression établie par l'élément d'actionnement (124).
